# EUROPEAN PATENT APPLICATION

(11) **EP 4 804 089 A1**
(43) Date of publication of application: **09.09.2026**
(21) Application number: 25305300.3
(22) Date of filing: 06.03.2025
(51) Int. Cl.: G06N 10/70, G06N 10/40, G06N 10/20

(54) **DECODER FOR QUANTUM REPETITION CODE IN ONE DIMENSION**

(71) Applicant: Institut National de Recherche en Informatique et en Automatique, 78150 Rocquencourt (FR)
(72) Inventor: PALETTA, Louis, 78150 LE-CHESNAY-ROCQUENCOURT (FR); MIRRAHIMI, Mazyar, 78150 LE-CHESNAY-ROCQUENCOURT (FR); VUILLOT, Christophe, 78150 LE-CHESNAY-ROCQUENCOURT (FR); LEVERRIER, Anthony, 78150 LE-CHESNAY-ROCQUENCOURT (FR)
(74) Representative: Vidon Brevets & Stratégie

(57) **Abstract**

A method of correcting errors in a repetition code protected quantum memory, comprising an initial step of measuring parities between adjacent qubits along a one dimension presentation of the code, and locating apparent defects on a map of said one dimension presentation of the code on the basis of the measured parities, and a subsequent treatment step during which each site of the map is associated with a local automaton, the local automaton displacing apparent defects along the map on the basis of a simulated attractive interaction between apparent defects, said interaction being simulated with local memory and communicated from site to site, the automaton erasing apparent defects by pairs when pairs of apparent defects become adjacent on the map.

## Description

### Technical context

The invention lies in the field of quantum error correcting codes that protect information in a noisy quantum computer by delocalizing it.

Topological codes are a particularly efficient approach to realize a quantum memory where one enforces local constraints on physical qubits placed on a finite dimensional manifold such as for example a surface. They typically display a good resistance to noise. In a 2D surface code, the error correction mechanism consists in measuring local stabilizers that form a syndrome, which is then fed to a classical decoder the role of which is to identify an error compatible with the syndrome that is likely. Decoders however often suffer from the following caveats: the decoder may requires access to the entire syndrome, and this imposes important hardware capabilities, and extra redundancy in the syndrome may be needed to cope with measurement errors.

Local decoders are known and distinguished from the above-mentioned global decoders. The stabilizer measurement sites are equipped with an automaton that can perform a computation, communicate with its neighbours and apply a local correction on the state. These actions form a local transition rule, that can induce a macroscopic dynamic useful for error correction purposes. A well-known example is Toom's rule that protects information stored in a 2D grid for a time exponential in the grid size.

Proposals for quantum local decoders for repetition code or surface code fall into two main categories: automata with a hierarchical structure inspired by classical constructions, and field based decoders where defects are interpreted as particles interacting with each other through a classical field simulated by the classical automaton.

Hierarchical constructions protect information for a time exp(γ*ₙ*) with γ*ₙ* ∝ *n^{α}* for α > 0, but suffer from a low error threshold for εd and εm, and from a poor effective distance *γₙ,* corresponding to the minimal weight of error configuration leading to a logical failure. The distance of the repetition code is n, and the effective distance therefore quantifies how well the local decoder performs compared to a global decoder.

Field-based decoders, on the other hand, display high thresholds and good performance for small system size but the memory lifetime saturates above a certain system size, unless the communication speed is kept increasing.

A 2D memory obtained by associating a cat code and a 2D repetition code decoded by Toom's rule is known from Lieu, S., Liu, Y. J., & Gorshkov, A. V. (2024). Candidate for a passively protected quantum memory in two dimensions. Physical Review Letters, 133(3), 030601.

2D memories obtained by decoding a surface code by a cellular automaton are known from Herold, M., Campbell, E. T., Eisert, J., & Kastoryano, M. J. (2015). Cellular-automaton decoders for topological quantum memories. Npj Quantum information, 1(1), 1-8., Balasubramanian, S., Davydova, M., & Lake, E. (2024). A local automaton for the 2D toric code. arXiv preprint arXiv:2412.19803, and Harrington, J. W. (2004). Analysis of quantum error-correcting codes: symplectic lattice codes and toric codes. California Institute of Technology.

As is apparent from the above comment of the prior art, known technics require two dimensions to be implemented and this complicates the logical operations between logical qubits.

### Features of the invention and associated advantages

To solve the problems of the prior art, the invention relates to the development of an autonomous quantum memory in quasi-1D, i.e. on a line with resources of not more than logarithmic size on each site. It uses a repetition code and a local automaton or local decoder. It can be embodied by a decoder, and is advantageously used with noise-biased qubits, typically cat qubits.

Thus in general words, the invention is embodied by a method of correcting errors in a repetition code protected quantum memory, comprising
- an initial step of measuring parities between adjacent qubits along a one dimension presentation or embedding of the code, and locating apparent defects on a map of said one dimension presentation of the code on the basis of the measured parities - this initial step is applied uniformly and simultaneously on all sites of the 1D lattice;
- and a subsequent treatment step during which each site of the map is associated with a local automaton, the local automaton displacing apparent defects along the map on the basis of a simulated attractive interaction between apparent defects, the interaction being simulated with local memory (group of classical bits) and communicated from site to site, the automaton erasing apparent defects by pairs when pairs of apparent defects become adjacent on the map. This subsequent step is applied also uniformly and simultaneously on all sites of the 1D lattice.

The initial step and the subsequent step together form one iteration of a permanent loop of correcting errors.

A defect is identified on the 1-D presentation of the code when the parities of two qubits adjacent on the 1-D presentation are different.

The 1D lattice can be periodic. Under such geometry of the memory a logical error corresponds to two defects that recombine after having gone around the cyclic lattice. The 1D lattice can also be finite and non-periodic, with boundary conditions.

When such a defect is identified, it is placed on a map of the 1-D presentation of the code. This map is composed of memories of classical bits. This map is a 1-D map and each site of the map is paired with a group of two qubits adjacent on the 1-D presentation of the code. This map encodes non quantum information and is used to initially encode and locate the presence or the absence of defects, each defect being associated with a group of two adjacent qubits. Very remarquably, the invention erases any finite-size error on an infinite lattice, which corresponds to recombining defects without having them to loop around the periodic 1D lattice. The invention also erases any error of diameter < *β* × *n* on a periodic lattice of size n for some *β>* 0.

According to optional and advantageous features:
- the local automaton may roll out a recurrent emission of interaction signals, on the map, by apparent defects, and a propagation of said signals (optionally and advantageously, but not necessarily, at uniform speed) on the map, each such interaction signal propagating up to a further apparent defect to mediate the said simulated attractive interaction.
- if an apparent defect on the map has been reached by an interaction signal propagating along the map the local automaton may displace said reached apparent defect in the direction from which the interaction signal has reached it.
- the local automaton in a site may memorize a number of interaction signals locally emitted in a forward direction in the presence of an apparent defect on the map and later, the apparent defect having been erased on the map, rolls out local or distant annihilation of up to a same number of interaction signals.

- the local automaton may emit anti-signals in the forward direction, an anti-signal and an interaction signal annihilating each other when they met. Said anti signals may propagate advantageously faster than the interaction signals in the forward direction.
- the local automaton locally may annihilate interaction signal reaching the site in the direction opposite the forward direction subject to the condition that a corresponding interaction signal has been sent from this site in the past on the basis of the memorized number; ie the site is the site of a non empty (non zero) stack;
- the simulated attractive interaction may be rolled out between closest apparent defects.
- the local automaton may ensure a balance at all time between the number of interaction signals and the number of stack increments and anti-signals, so that recombination of said particles by pair ensure the local automaton returns to the all zero configuration at the end.
- the simulated attractive interaction may be asymmetrical, or may be composed of the superposition of two asymmetrical simulated attractive interactions.
- the repetition code may be a 1-D lattice that can be embedded in or on a 1D, 2D or higher dimensional lattice.

The invention is also embodied in a quantum memory setup comprising a memory composed of cat qubits and protected with a repetition code, wherein the setup further comprises local automatons or processors associated with respective vertices of the code and configured to execute a decoder program implementing the steps of a method according to the invention.

More in details, two new local decoders, the symmetric and asymmetric signal-rule, for the quantum repetition code in one dimension, are presented. These decoders interpret odd parities between neighbours as defects which are displayed on a map of the 1-D qubit lattice and then, on the map attracted to each other through the exchange of classical point-like binary information. The automaton operates in discretized time. There is an exponential logical error suppression for the symmetric decoder when errors arise at each time step. This is true also for the asymmetric decoder.

Associating any of these decoders with biased-noise qubit such as cat qubits yields a local quantum memory in one dimension. An autonomous quantum memory in quasi-1D is indeed obtained by concatenation of a cat code ie a bosonic code tailored for protection against phase-flips with a 1D repetition code, or any other biased noise qubit code on n qubits protected against bit-flips by an automaton according to the invention,

The decoder uses one local automaton per site, and this automaton is able to measure parity on the site, i.e. between two neighbouring cat qubits, perform elementary calculations using classical bits on the site, communicate with the neighbouring sites and apply corrections on the site.

A site is assigned to each pair of adjacent qubits and each site is associated with the following variables:
- defect (binary variable),
- interaction signals of two kinds: forward-signal (binary variable) and backward-signal (another binary variable),
- anti-signal (binary variable),
- and stack (positive integer variable).

Such automaton is called « asymmetric signal rule ». The 1-D lattice has been given an arbitrary orientation out of the two possible, say from the left to the right. The value of the parities of the cat qubits are saved in the variable defect and the decoding problem is thus to merge the closest defects, by groups of two defects. This is done by an attractive interaction between defects and this interaction is created by exchanging binary signals.

The decoder works as follows: each defect creates a forward-signal at each time step (each iteration). These forward-signals propagate to the right at each step. When a forward-signal meets a defect, said defect is moved to the site immediately on its left and the forward-signal is transformed in backward-signal propagating to the left with a speed higher than that of the forward signals (in an embodiment at least three times higher). Upon creation of a forward-signal, the stack is increased by one unit.

The stack is decreased by one unit in the absence of a defect and an anti-signal is created. The anti-signal propagates with a speed higher than that of the forward signals to the right and later recombines with a forward or a backward-signal that has been met (by recombining it is meant that two binary variables equal to 1 are changed to 0, as soon as the two signals meet). The rules of creation and destruction of signals are such that at the end of decoding all signals are erased from the system.

The stack variable needs to be able to accommodate an integer of size O(n), and this is possible on log n bits. Thus the memory per site is of logarithmic size.

An even higher performance variation of the invention is built by combining an asymmetric signal rule to the right with another one, but to the left.

A possible embodiment uses cat qubits as classical bits in the automaton.

### List of figures

Figure 1 shows an aspect of the invention.
Figure 2 shows steps of a method according to an embodiment of the invention.
Figure 3 is a local representation of the automaton variables in one embodiment.
Figure 4 is the representation of the elementary operation in one cycle of the automaton in one embodiment.
Figure 5 is a depiction of the erasure of clusters (the 1-D lattice is shown horizontally, as on figures 3 and 4, and the time vertically, as on figure 4).
Figure 6 shows comparison of performances of one embodiment of the invention with other decoders.
Figure 7 is a representation of the covering of a 2D lattice with a 1D lattice, that is used in embodiments of the invention.

### Description in relation with the figures - embodiments

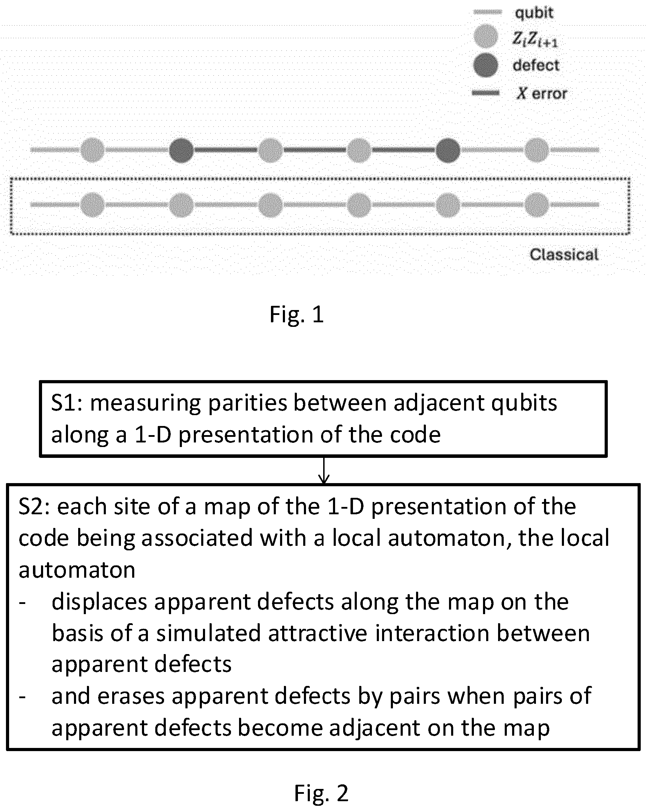

[Fig. 1] Embodiments of a local decoder for the quantum repetition code under Pauli X errors are presented herebelow. Each of these embodiments can be combined with biased-noise qubits to yield a quantum memory. An X error is a bit-flip error.

As shown on the first line of figure 1, the n-qubit 1D repetition code is defined by placing qubits on the n edges on a cycle and stabilizers *Sᵢ* := Z_{(*i*-1,*i*),(*i,i*+1)} on its vertices i ∈ Zn. This code encodes a single logical qubit, with logical codewords |*k*〉*_{L}* := |k〉^{⊗*n*} for *k* ∈ {0, 1} for k ∈ {0, 1}. The syndrome of an X-type error E defined on the edges of the cycle then corresponds to the boundary of the error. It is convenient to represent it as $Σ = \partial E : = \left\{{σ}_{1},…,{σ}_{l}\right\} ⊆ {ℤ}_{n}$, i.e. as the set of vertices where the values of the incident edges differ. The convention that σj < σj+1 is used. This set of vertices has even cardinality. The vertices of this set carry point-like excitations that are called defects.

As is visible on figure 1, an exemplary situation is shown based a repetition of 7 times a physical qubit. Each pair of adjacent qubits define a site in between them - 6 sites are thus visible.

Three consecutive bit-flipped qubits (X-errors) are shown, in positions 3, 4 and 5 (dark grey lines), whereas qubits 1, 2, 6 and 7 are bit-unflipped (light grey lines).

Thus two defects are visible, between the second and third physical qubits, and between the fifth and sixth physical qubits. These define two defects sites (dark grey disc), while the lattice has four other sites that do not show a defect (light grey disc).

The decoding problem asks for a matching of these defects. It is assumed that classical computation is performed reliably, and it is reasonable to allow the memory size to depend (logarithmically) on the system size.

As is shown on the second line of figure 1, a lattice of classical groups of bits is used to map the lattice of sites.

[Fig. 2] As shown on figure 2, a method according to an embodiment of the invention includes a step S1 of measuring parities between adjacent qubits along a 1-D presentation of the code. This step is followed by a step S2 in which, each site of a map of the 1-D presentation of the code being associated with a local automaton, the local automaton
- displaces apparent defects along the map on the basis of a simulated attractive interaction between apparent defects
- and erases apparent defects by pairs when pairs of apparent defects become adjacent on the map.

Further details are given in the remainder of the description.

Two 1D local decoders for the quantum repetition code, the asymmetric signal-rule (ASR) and the symmetric signal-rule (SSR) are presented here below. The symmetrized version, the SSR, leads to advantageous performance.

The decoders are compared with a variant of Toom's rule on a flat 2D surface and with a cellular automaton which induces a dynamics similar to that of the quantum two-line voting scheme.

### First embodiment : Asymmetric signal-rule or ASR.

The local decoder is defined via a transition rule that updates classical variables assigned to each vertex of Zn.

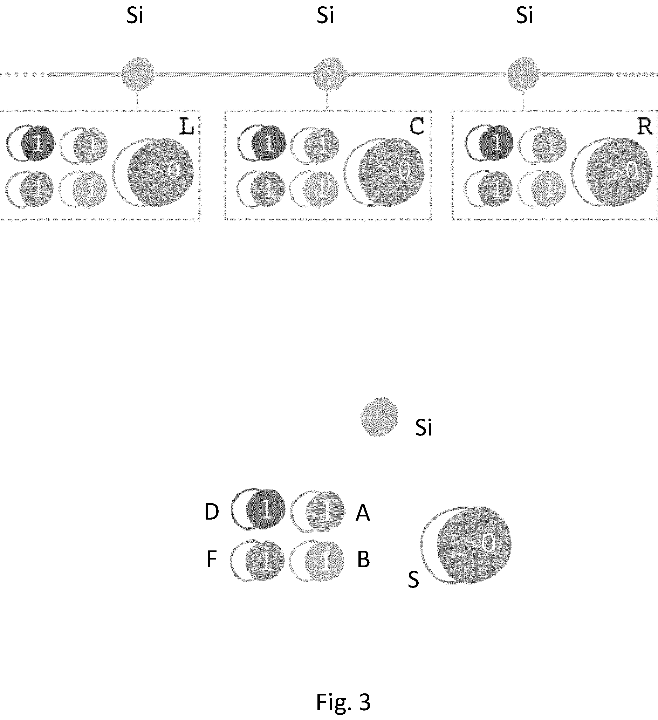

[Fig. 3] Each such site (labelled Si on figure 3) has four binary registers encoding the presence of four types of point-like particles: defects, forward-signals, backward-signals and anti-signals, as well as an additional stack register serving as a reservoir of anti-signals. Forward and backward signals are interaction signals.

Three successive sites are represented on the upper part of Fig. 3 that is a local representation of the automaton variables: a binary register is a disc with the label "1" (for one site there are four such discs, for defects, forward signals, backward signals and anti-signals - these variables are represented in white when their value is 0, and coloured when their value is not, ie 1 for binary variables, >0 for the stack) and a additional stack register serving as reservoir is a larger disc with a label ">0".

On figure 3, the letters "L", "C" and "R" mean respectively "left", "center" and "right".

The lower part of figure 3 shows more precisely the register defect D, the register forward signal F, the register backward signal B, the register anti-signal A and the stack register S.

A configuration $u \left(t\right) ∈ Un : = {\left({ℤ}_{2}^{4}\times ℕ\right)}^{{ℤ}_{n}}$ of the automaton at time t corresponds to the value of all variables on all sites.

The automaton mediates an attractive interaction between defects through the exchange of signals.

Its dynamics is the following: at each iteration, a defect emits a forward-signal, which propagates to the right until meeting another defect. In that case, the defect moves one step to the left and the forward-signal becomes a backward-signal traveling to the left.

The local stack at a defect is incremented when a forward-signal is sent, and decremented when a backward-signal comes back. This allows keeping track of the forward-signals that have been emitted, locally and individually for each site. The stack is associated to a specific site and thus follows the number of signals sent from this particular site.

When a stack is no longer associated with a defect (because the latter has moved to the left), said stack sends anti-signals that move to the right and the role of which is to recombine with the remaining forward or backward-signals. These anti-signals move quicker than the forward signals.

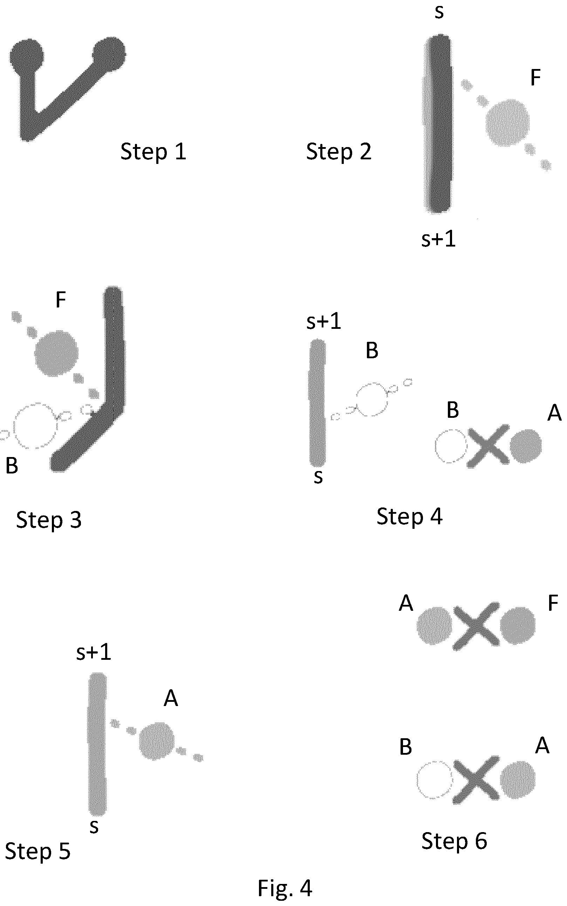

[Fig. 4] The figure 4 depicts signals creation and annihilation rules. Six steps are shown. In each step the initial situation is shown in the upper part of the drawing, and the final situation is shown in the lower part of the drawing. The value of the stack is further indicated when it changes.

The elementary operations in one step are the following, by chronological order:
Step 1: Recombination of two defects if these defects are neighbour from one another (this is a correction). Initially two defects are present (Dleft=1 and Dcenter=1) and eventually, there is no defect remaining (Dleft=0 and Dcenter=0).
Step 2: Emission of a forward-signal F if the site has a defect, and in that case, incrementation of the stack of the site by 1 unit. Also propagation of all forward-signals by one (only one) site to the right.
Step 3: In a site where a defect is present, and if a forward-signal F arrives and is thus about to be located at the same site as a defect: the forward-signal F (coming from the left) is immediately transformed in a backward-signal B (going to the left), the defect is displaced by one site to the left. Initially one defect is present (D=0 and D=1 from left to right) and eventually, there is still one defect but it moved (D=1 and D=0).
Step 4: Displacement of all backward-signals B from one site to the next to the left. Where a backward-signal B meets a strictly positive stack annihilation of the backward signal and the stack is decreased by one unit (left part). And where a backward signal B meets an anti-signal A, combination of the backward-signal B with an anti-signal A being met on the site - both are annihilated (right part). Step 4 is repeated at least three times for one step 2.
Step 5: Creation of an anti-signal A by decrementing the stack by 1 on each site where the stack is strictly positive, and if there is no defect on the site.
Step 6: Propagation of all anti-signals A from one site to the next to the right. Wherever applicable, recombination of an anti-signal with a forward-signal (upper line) or with a backward-signal (lower line) being met on the site (recombined signals are annihilated). Step 6 is repeated at least twice for one occurrence of step 2.

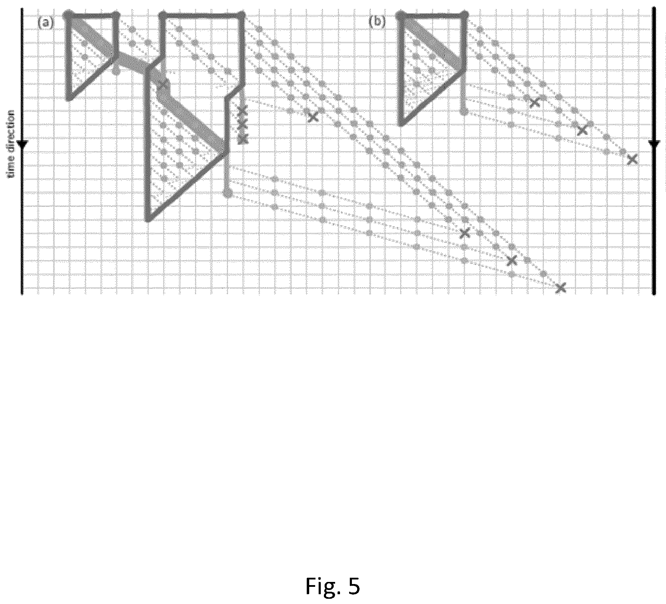

[Fig. 5] A sequence of automaton configuration u(t) ∈ Un is represented on Figure 5, with time going downwards. On the left part (a) the erasure of a complex cluster is shown with where backward-signals and anti-signals represented at their creation when on the left of the rightmost syndrome. On the right part (b), the erasure of a simpler error cluster is shown. Each defect sends forward-signals to its right until forward-signals sent from the left defect reaches the right defect, at which point the right defect is attracted to the left by each signal it receives until it recombines with the left defect. Forward-signals that have induced a defect displacement transform into backward-signals that propagate in the opposite direction and recombine with the left stack. Forward-signals sent by the right defect recombine with faster anti-signals created from the decrement of the right stack when it no longer coincides with a defect.

The automaton can read the values of the registers at its neighbouring left and right sites, L and R, but can only update the registers at C. The rule is applied in parallel on all the sites. The state of the automaton at the beginning of an iteration on site X ∈ {L, C, R} is given by the values Var.X for Var ∈ {Def, FwS, BwS, AnS, Sta}, for defect, forward signal, backward signal, anti-signal and stack.

A threshold theorem for the ASR in the code-capacity model, when the rule is applied on each site for τ > constant x n time steps is further enunciated. Theorem 1 on ASR code-capacity threshold : There exist εth > 0, α > 0 and τ > constant x n such that for ε < εth, the logical error rate εL of the ASR applied for τ time steps to an initial error where each qubit is flipped independently and identically with probability ε satisfies *ε_{L}* ≤ *exp*(-*n^{α}*). It is also stated that a > 0.16

### Second embodiment: Symmetric Signal-Rule or SSR

The symmetric signal-rule (SSR) is obtained by combining an ASR as above, pointing to the right, with a second ASR pointing to the left so that the attraction works in both directions.

On an infinite lattice Z, the ASR erases any finite-size error E ⊂ Z of width Δ in O(Δ) time steps.

All defects and excitations (either signals or stack increments) eventually recombine in a time linear in the width Δ := σ2m -σ1 of the error.

### Performances

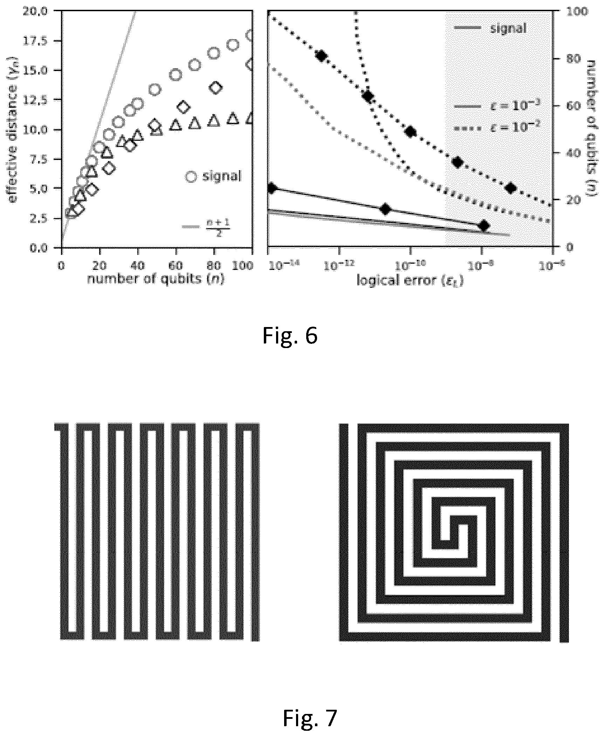

[Fig.6] Numerical evaluation of the performance of SSR for a phenomenological model was performed, with pick εd = εm = ε unless stated otherwise.

The SSR decoder was compared with a variant of Toom's rule defined on a flat 2D surface, and with a two-lines-voting like cellular automaton decoder. The practical performance of the decoders was assessed by fitting εL with an ansatz of the form *An*(*Bε*)*^{γn},* where the exponent *γₙ* is allowed to depend on n. Comparing *γₙ* to n+1 2 helps assess the performance loss relative to global decoders like minimum weight perfect matching MWPM. Plot of *γₙ* is shown on Fig. 6 (left part) for the three decoders considered. Values of B-1 = 6.5% were obtained for the SSR decoder. The right part of Fig. 6 shows the number of physical qubits required to achieve a given logical error rate for ε = 10⁻² and 10⁻³. The behavior of *γₙ* as a function of n for the SSR decoder provides evidence of the exponential suppression of the logical error rate with increasing system size in the asymptotic regime. In contrast, *γₙ* saturates from n ≥ 30 onward for the cellular automaton decoder. For all considered system sizes, numerical simulations show that the SSR outperforms Toom's rule.

The SSR approaches the performance of global decoders in terms of effective distance for small system sizes, and evidence for asymptotic exponential suppression of the logical error probability in *n^{α}* with α > 0 was observed. The 1D SSR outperforms Toom's rule for practically relevant parameters, without exhibiting any saturation of the logical error rate for large n.

Both the ASR and SSR decoders can be made to work with modest classical resources on each site. The ASR requires one binary register for each of the four types of point-like excitations, an a register able to store an integer of size O(n) to represent the stack, typically on O(log n) bits using binary encoding, and a few auxiliary bits for information transfer and local computation. The material cost is simply doubled for the SSR.

### Variations

[Fig. 7] The rule is extended to a 2D lattice, which is relevant for implementation on a surface. The 2D lattice can be covered with a 1D lattice as shown on figure 7 (two different variations are shown), using meanders, serpentines or spirals, for example.

### Conclusion

Two non-limiting local automatons have been disclosed: the symmetric and asymmetric signal-rules. Each of them is used as a decoder for the quantum repetition code. Embodiments include a one dimensional quantum memory, that can be periodic (cyclic), obtained by concatenating a quantum repetition code, protected against bit-flips by a signal-rule automaton, with a bosonic code tailored for protection against phase-flips, e.g. cat codes.

## Claims

1. A method of correcting errors in a repetition code protected quantum memory, comprising an initial step (S1) of measuring parities between adjacent qubits along a one dimension presentation of the code, and locating apparent defects on a map of said one dimension presentation of the code on the basis of the measured parities, and a subsequent treatment step (S2) during which each site of the map is associated with a local automaton, the local automaton displacing apparent defects along the map on the basis of a simulated attractive interaction between apparent defects, said interaction being simulated with local memory and communicated from site to site, the automaton erasing apparent defects by pairs when pairs of apparent defects become adjacent on the map.

2. A method of correcting errors in a repetition code protected memory, according to claim 1, wherein the local automaton rolls out a recurrent emission of interaction signals, on the map, by apparent defects, and a propagation of said interaction signals on the map, each such interaction signal propagating up to a further apparent defect to mediate the said simulated attractive interaction.

3. A method of correcting errors in a repetition code protected memory, according to claim 1 or claim 2, wherein if an apparent defect on the map has been reached by an interaction signal propagating along the map the local automaton displaces said reached apparent defect in the direction from which the interaction signal has reached it.

4. A method of correcting errors in a repetition code protected memory, according to any of claims 1 to 3, wherein the local automaton in a site memorizes a number of interaction signals locally emitted in a forward direction in the presence of an apparent defect on the map and later, the apparent defect having been erased on the map, rolls out local or distant annihilation of up to a same number of interaction signals.

5. A method of correcting errors in a repetition code protected memory, according to claim 4, wherein the local automaton emits anti-signals in the forward direction, an anti-signal and an interaction signal annihilating each other when they met.

6. A method of correcting errors in a repetition code protected memory, according to claim 4 or claim 5, wherein the local automaton locally annihilates interaction signal reaching the site in the direction opposite the forward direction.

7. A method of correcting errors in a repetition code protected memory, according to any of claims 1 to 6, wherein the simulated attractive interaction is rolled out between closest apparent defects.

8. A method of correcting errors in a repetition code protected memory, according to any of claims 1 to 7, wherein the simulated attractive interaction is asymmetrical, or is composed of the superposition of two asymmetrical simulated attractive interactions.

9. A method of correcting errors in a repetition code protected memory, according to any of claims 1 to 8, wherein the repetition code is a 1-D lattice that is embedded in a 1D, 2D or higher dimensional lattice.

10. A quantum memory setup comprising a memory composed of cat qubits and protected with a repetition code, wherein the setup further comprises local automatons or processors associated with respective vertices of the code and configured to execute a decoder program implementing the steps of a method according to any of claims 1 to 9.
